# EUROPÄISCHE PATENTSCHRIFT

(11) **EP 3 290 316 B1**
(45) Veröffentlichungstag und Bekanntmachung des Hinweises auf die Patenterteilung: **11.11.2020**
(21) Anmeldenummer: 17182159.8
(22) Anmeldetag: 19.07.2017
(51) Int. Cl.: B62K 19/36, B62J 1/08, B62M 6/90

(54) **SCHUTZANORDNUNG SOWIE HOHLKÖRPERANORDNUNG, INSBESONDERE SATTELROHR**
PROTECTIVE ASSEMBLY AND HOLLOW-BODY ASSEMBLY, IN PARTICULAR SADDLE TUBE
SYSTÈME DE PROTECTION ET SYSTÈME DE CORPS CREUX, EN PARTICULIER TUBE DE SELLE

(30) Priorität: 01.09.2016 DE 102016216553
(43) Veröffentlichungstag der Anmeldung: 07.03.2018
(73) Patentinhaber: Robert Bosch GmbH, 70442 Stuttgart (DE)
(72) Erfinder: Mehlo, Dennis, 72762 Reutlingen (DE); Jabs, Volker, 72144 Dusslingen (DE); Kohlrausch, Philipp, 70180 Stuttgart (DE)

(56) Entgegenhaltungen:
- EP-A1- 2 497 970
- JP-A- 2003 065 388
- JP-A- 2014 -97 700
- US-A- 5 678 836
- US-A1- 2012 240 350
- US-B1- 6 332 735

## Beschreibung

### Stand der Technik

Die vorliegende Erfindung betrifft eine Schutzanordnung für ein Fahrrad und eine Hohlkörperanordnung, insbesondere ein Sattelrohr eines Zweirads, sowie eine vormontierbare Baugruppe mit einer Schutzanordnung oder einer Hohlkörperanordnung und einen Rahmen eines Fahrzeugs, insbesondere eines Zweirads.

Hohlkörperanordnungen sind aus dem Stand der Technik bspw. bei Sattelrohren von Fahrrädern bekannt. Bspw. zeigt die DE 10 2004 019 381 A1 ein Sattelrohr für einen Fahrradrahmen, bei dem sich ein Rahmenquerschnitt in Längsrichtung des Sattelrohrs verändert. Weiterhin ist es bekannt, insbesondere bei Fahrrädern mit elektrischem Hilfsantrieb, Komponenten, wie z. B. Akkus oder dergleichen, aus optischen und/oder technischen Gründen versteckt und geschützt in einem Rahmenbauteil, insbesondere einem Sattelrohr, anzuordnen. Bei Sattelrohren ist es ferner möglich, dass durch Einstecken einer langen Sattelstütze, an welcher ein Sattel fixiert ist, das Sattelrohr oder eine im Inneren des Sattelrohrs angeordnete Komponente beschädigt werden kann. Auch ist es möglich, dass aufgrund von Spiel der im Sattelrohr angeordneten Komponenten eine Geräuschentwicklung durch einen Kontakt zwischen dem Sattelrohr und der Komponente auftreten kann.

Die Schrift DE 92 11 582 U1 offenbart die Merkmale der Präambel des Anspruchs 1 und zeigt eine Büchse, welche in einen Rohrinnenraum eines Fahrrads eingesteckt wird.

### Offenbarung der Erfindung

Die erfindungsgemäße Schutzanordnung mit den Merkmalen des Anspruchs 1 weist demgegenüber den Vorteil auf, dass ein Kontakt zwischen einem ersten Hohlkörper und einem im ersten Hohlkörper angeordneten Innenkörper vermieden werden kann. Dadurch kommt es nicht zu einer unerwünschten Geräuschentwicklung durch einen Kontakt des Innenkörpers mit dem ersten Hohlkörper. Weiterhin kann erfindungsgemäß der Innenkörper sicher im ersten Hohlkörper gelagert werden, wobei insbesondere eine schwimmende Lagerung des Innenkörpers möglich ist. Dies wird erfindungsgemäß dadurch erreicht, dass die Schutzanordnung einen Schutzkörper und eine Zentriereinrichtung aufweist. Die Zentriereinrichtung umfasst ein erstes und ein zweites Zentrierelement. Der Schutzkörper ist eingerichtet zwischen dem ersten Hohlkörper und dem Innenkörper. Das erste Zentrierelement zentriert dabei den Schutzkörper gegenüber dem Innenkörper und das zweite Zentrierelement ist eingerichtet, den Schutzkörper gegenüber dem ersten Hohlkörper zu zentrieren. Somit kann eine schwimmende Innen-Außen-Zentrierung zwischen dem Schutzkörper, dem ersten Hohlkörper und dem Innenkörper realisiert werden. Der äußere erste Hohlkörper schützt dabei den Innenkörper und über den Schutzkörper und die Zentriereinrichtung erfolgt eine Lagerung des Innenkörpers im ersten Hohlkörper. Die Schutzanordnung ist vorzugsweise Teil einer Hohlkörperanordnung, bevorzugt eines Rahmens, insbesondere eines Fahrradrahmens, und ist besonders bevorzugt eine SatteIrohranordnung.

Die Unteransprüche zeigen bevorzugte Weiterbildungen der Erfindung.

Vorzugsweise ist das erste und/oder zweite Zentrierelement elastisch ausgebildet. Das erste und/oder zweite Zentrierelement ist bspw. aus einem elastischen Material hergestellt oder weist alternativ elastische Bereiche auf.

Erfindungsgemäß sind das erste und zweite Zentrierelement in einem einstückigen Bauteil integriert. Dadurch kann eine kostengünstige und einfache Herstellung der Zentriereinrichtung ermöglicht werden.

Das einstückige Bauteil, welches die Zentriereinrichtung bereitstellt, weist vorzugsweise einen Außenring auf, welcher das zweite Zentrierelement umfasst. Dadurch kann am gesamten Außenring eine Lagerung des Schutzkörpers gegenüber dem ersten Hohlkörper erreicht werden.

Weiter bevorzugt weist das einstückige Bauteil der Zentriereinrichtung eine Vielzahl von vom Außenring radial nach innen gerichteten Nasen auf, welche das erste Zentrierelement bilden.

Besonders bevorzugt weist der Schutzkörper an einem ersten Ende eine Vielzahl von Schlitzen auf, wobei die Nasen des ersten Zentrierelements der Zentriereinrichtung durch die Schlitze des Schutzkörpers nach innen vorstehen. Somit kann auch gleichzeitig eine sichere Fixierung der Zentriereinrichtung am Schutzkörper erfolgen.

Der Innenkörper ist erfindungsgemäß ein zweiter Hohlkörper oder ein Akku oder ein elektronisches Bauteil. Besonders bevorzugt ist der Innenkörper eine Sattelstütze eines Fahrrads.

Ferner betrifft die vorliegende Erfindung eine vormontierbare Baugruppe umfassend den Schutzkörper, den Innenkörper und die Zentriereinrichtung. Dadurch kann eine besonders einfache Montage der vormontierten Baugruppe in den ersten Hohlkörper zur Fertigstellung der Hohlkörperanordnung ermöglicht werden.

Ferner betrifft die vorliegende Erfindung eine Hohlkörperanordnung mit einem ersten Hohlkörper und einer erfindungsgemäßen Schutzanordnung, wobei die Schutzanordnung im ersten Hohlkörper angeordnet ist. Die vorliegende Erfindung ist somit auch eine Hohlkörperanordnung, umfassend einen ersten Hohlkörper, einen im ersten Hohlkörper angeordneten Innenkörper, einen Schutzkörper, und eine Zentriereinrichtung mit einem ersten Zentrierelement und einem zweiten Zentrierelement, wobei der Schutzkörper zwischen dem ersten Hohlkörper und dem Innenkörper angeordnet ist, wobei das erste Zentrierelement den Schutzkörper gegenüber dem Innenkörper zentriert, und wobei das zweite Zentrierelement den Schutzkörper gegenüber dem ersten Hohlkörper zentriert.

Weiter bevorzugt ist der erste Hohlkörper als Rohr, insbesondere als Zylinderrohr vorgesehen. Ferner bevorzugt ist der Innenkörper als Rohr, insbesondere ebenfalls als Zylinderrohr vorgesehen. Weiter bevorzugt ist der Schutzkörper als Rohr, ebenfalls insbesondere bevorzugt als Zylinderrohr, vorgesehen.

Weiterhin betrifft die vorliegende Erfindung einen Rahmen eines Fahrzeugs, insbesondere einen Zweiradrahmen, umfassend eine Hohlkörperanordnung gemäß der vorliegenden Erfindung. Der Rahmen ist besonders bevorzugt ein Fahrradrahmen, insbesondere ein Fahrradrahmen eines Fahrrads mit elektrischem Hilfsantrieb.

### Kurze Beschreibung der Zeichnung

Nachfolgend wird ein bevorzugtes Ausführungsbeispiel der Erfindung unter Bezugnahme auf die begleitende Zeichnung im Detail beschrieben. In der Zeichnung ist:
- Figur 1: eine schematische Darstellung eines Fahrrads mit einer erfindungsgemäßen Schutzanordnung als Teil einer Hohlkörperanordnung,
- Figur 2: eine schematische, perspektivische Ansicht einer vormontierbaren Baugruppe der Schutzanordnung von Figur 1 und
- Figur 3: eine schematische Teilschnittansicht der Schutzanordnung von Figur 1.

### Bevorzugte Ausführungsform der Erfindung

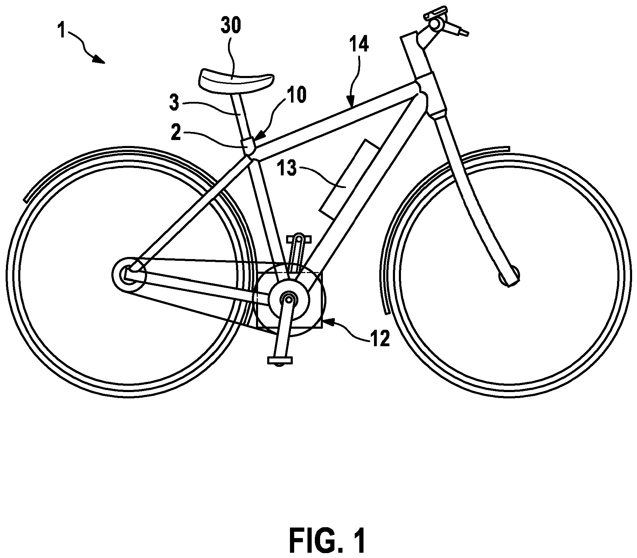

Nachfolgend wird unter Bezugnahme auf die Figuren 1 bis 3 eine Schutzanordnung und eine Hohlkörperanordnung 10 eines Fahrrads 1 gemäß einem bevorzugten Ausführungsbeispiel der Erfindung im Detail beschrieben.

Wie aus Figur 1 ersichtlich ist, ist in diesem Ausführungsbeispiel die Schutzanordnung und die Hohlkörperanordnung 10 an einem Sattelrohr eines Fahrrads 1 realisiert.

Das Fahrrad 1 ist ein Fahrrad mit elektrischem Hilfsantrieb 12, wobei der Hilfsantrieb 12 im Bereich des Tretlagers des Fahrrads angeordnet ist. Das Bezugszeichen 14 bezeichnet einen Fahrradrahmen, wobei das als Hohlkörper 2 ausgebildete Sattelrohr Teil des Fahrradrahmens 14 ist. Ferner ist ein Akku 13 zur Versorgung des Hilfsantriebs 12 mit elektrischer Energie vorgesehen.

Der als Sattelrohr ausgebildete erste Hohlkörper 2 ist zylindrisch vorgesehen und nimmt in seinem Inneren einen hohlen Innenkörper 3 auf, welcher in diesem Ausführungsbeispiel eine Sattelstütze des Fahrrads ist. Die Sattelstütze ist ebenfalls zylindrisch vorgesehen und dient zur Fixierung eines Sattels 30. Statt der Sattelstütze kann bevorzugt auch der Akku des Fahrrads als Innenkörper, und/oder ein elektronisches Bauteil, z.B. eine Steuerung des elektronischen Hilfsantriebs des Fahrrads, verwendet werden.

Der Innenkörper 3 ist somit als zweiter Hohlkörper ausgebildet.

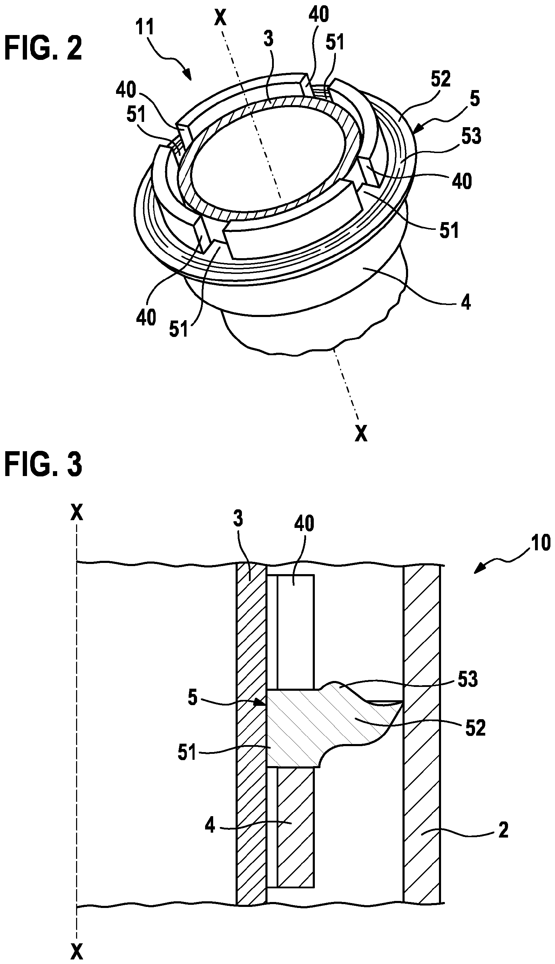

Die Hohlkörperanordnung 10 umfasst ferner neben dem ersten Hohlkörper 2 die Schutzanordnung, welche den Innenkörper 3, einen Schutzkörper 4 und eine Zentriereinrichtung umfasst. Der Schutzkörper 4 ist im Detail aus den Figuren 2 und 3 ersichtlich. Der Schutzkörper 4 ist ein zylindrisches Rohrstück, welches zwischen dem ersten Hohlkörper 2 und dem Innenkörper 3 angeordnet ist (vgl. Figur 3). An einem freien Ende des Schutzkörpers 4, welches in Richtung des Sattels 30 gerichtet ist, sind in Axialrichtung des Schutzkörpers 4 verlaufende Schlitze 40 vorgesehen, welche bevorzugt jeweils gleich ausgebildet sind und weiter bevorzugt entlang des Umfangs des Schutzkörpers 4 in gleichen Abständen benachbart zueinander angeordnet sind.

Ferner umfasst die Hohlkörperanordnung 10 eine Zentriereinrichtung 5, welche ebenfalls im Detail aus den Figuren 2 und 3 ersichtlich ist. Die Zentriereinrichtung 5 umfasst ein erstes Zentrierelement 51 und ein zweites Zentrierelement 52. Das erste Zentrierelement 51 umfasst mehrere radial nach innen in Richtung zur Mittelachse X-X vorstehende Nasen. Das zweite Zentrierelement 52 umfasst einen umlaufend geschlossenen Ring. Die Nasen des ersten Zentrierelements 51 verlaufen ausgehend vom zweiten Zentrierelement 52 in Radialrichtung in Richtung zur Mittelachse X-X und sind in den Schlitzen 40 des Schutzkörpers 4 angeordnet. Dies ist im Detail aus den Figuren 2 und 3 ersichtlich.

In diesem Ausführungsbeispiel sind genau vier Schlitze 40 und vier Nasen des ersten Zentrierelements 51 vorgesehen. Wie weiter aus Figur 3 ersichtlich ist, sind die Nasen 51 in Kontakt mit dem Innenkörper 3. Am radialen Außenumfang des zweiten Zentrierelements 52 ist ein Kontakt zwischen dem zweiten Zentrierelement 52 und dem ersten Hohlkörper 2 an dessen Innenumfang vorgesehen. Somit berührt die Zentriereinrichtung 5 im montierten Zustand sowohl den ersten Hohlkörper 2 an einem Innenumfang und den Innenkörper 3 an einem Außenumfang (vgl. Figur 3).

Für eine sichere Zentrierung sind das erste und zweite Zentrierelement 51, 52 vorzugsweise elastisch ausgebildet. Hierbei kann die Zentriereinrichtung 5 bspw. aus einem elastischen Material hergestellt werden, bevorzugt einem elastischen Kunststoff. Wie aus Figur 2 ersichtlich ist, sind das erste Zentrierelement 51 und das zweite Zentrierelement 52 in ein einstückiges Bauteil integriert. Somit kann dieses Bauteil bspw. mittels Spritzgießen oder dergleichen hergestellt werden.

Durch Vorsehen einer umlaufenden Wulst 53 kann eine erhöhte Elastizität der Zentriereinrichtung erreicht werden. Die Wulst 53 ist in diesem Ausführungsbeispiel am zweiten Zentrierelement 52 ausgebildet.

Somit kann mittels der Zentriereinrichtung 5 eine schwimmende Lagerung des Schutzkörpers 4 zwischen dem ersten Hohlkörper 2 und dem Innenkörper 3 erreicht werden. Dabei kann insbesondere ein Kontakt zwischen dem Innenkörper 3 und dem ersten Hohlkörper 2 vermieden werden.

Durch die Anordnung des Innenkörpers 3 im ersten Hohlkörper 2 erfolgt somit auch ein Schutz des Innenkörpers 3, sodass Beschädigungen, z. B. während der Montage oder eines Wechsels des Innenkörpers, vermieden werden können. Somit stellt die Zentriereinrichtung 5 eine schwimmende Innen-Außen-Lagerung des Innenkörpers 3 bereit. Der Schutzkörper 4 beugt dabei unerwünschten Berührungen zwischen dem Innenkörper 3 und dem ersten Hohlkörper 2 vor. Somit verhindert die vorliegende Erfindung eine Geräuschbildung, welche durch einen Kontakt zwischen dem Innenkörper 3 und dem ersten Hohlkörper 2 auftreten könnte.

Es sei angemerkt, dass der Innenkörper 3 bspw. auch ein Akku oder dergleichen sein kann, welcher im ersten Hohlkörper 2 angeordnet ist und beim Fahrrad mit elektrischem Hilfsantrieb zur Energieversorgung des elektrischen Hilfsantriebs dient.

Durch die einstückige Ausbildung der Zentriereinrichtung 5 mit dem eine Vielzahl von radial vorstehenden Nasen umfassenden ersten Zentrierelement 51 und dem umlaufend ringförmig geschlossenen zweiten Zentrierelement 52 kann eine sehr kostengünstige Herstellbarkeit der Zentriereinrichtung 5 ermöglicht werden. Durch eine Wahl der Breite des zweiten Zentrierelements 52 in radialer Richtung kann insbesondere ein Abstand zwischen der Innenwand des ersten Hohlkörpers 2 und dem Schutzkörper 4 eingestellt werden. Ebenso kann durch eine Wahl einer radial nach innen gerichteten Länge der Nasen des ersten Zentrierelements 51 ein Abstand zwischen dem Innenkörper 3 und dem Schutzkörper 4 eingestellt werden. Das erste Zentrierelement 51 zentriert somit den Schutzkörper 4 gegenüber dem Innenkörper 3 und das zweite Zentrierelement 52 zentriert den Schutzkörper 4 gegenüber dem ersten Hohlkörper 2. Somit führt das erste Zentrierelement eine Innenzentrierung des Schutzkörpers aus und das zweite Zentrierelement führt eine Außenzentrierung des Schutzkörpers aus.

## Patentansprüche

1. Schutzanordnung für ein Fahrrad, umfassend:
- einen Innenkörper (3),
- einen Schutzkörper (4), und
- eine Zentriereinrichtung (5) mit einem ersten Zentrierelement (51) und einem zweiten Zentrierelement (52),
- wobei der Schutzkörper (4) eingerichtet ist, zwischen einem als erster Hohlkörper ausgebildeten Sattelrohr (2) eines Fahrradrahmens und dem Innenkörper (3) angeordnet zu sein,
- wobei das zweite Zentrierelement (52) eingerichtet ist, den Schutzkörper (4) gegenüber dem Rohr (2) des Fahrradrahmens zu zentrieren, und
- wobei das erste Zentrierelement (51) und das zweite Zentrierelement (52) in ein einstückiges Bauteil integriert sind,
**dadurch gekennzeichnet, dass**
- das erste Zentrierelement (51) den Schutzkörper (4) gegenüber dem Innenkörper (3) zentriert, und
- der Innenkörper (3) ein zweiter Hohlkörper ist.

2. Anordnung nach Anspruch 1, wobei das erste Zentrierelement (51) und/oder das zweite Zentrierelement (52) elastisch ausgebildet sind.

3. Anordnung nach einem der vorhergehenden Ansprüche, wobei das einstückige Bauteil einen Außenring aufweist, welcher das zweite Zentrierelement (52) umfasst.

4. Anordnung einem der vorhergehenden Ansprüche, wobei das einstückige Bauteil eine Vielzahl von vom Außenring radial nach innen gerichteten Nasen aufweist, welche das erste Zentrierelement (51) bilden.

5. Anordnung nach Anspruch 4, wobei der Schutzkörper (4) ein erstes Ende mit einer Vielzahl von Schlitzen (40) aufweist, durch welche die Nasen des ersten Zentrierelements (51) nach innen vorstehen.

6. Anordnung nach einem der vorhergehenden Ansprüche, wobei der Schutzkörper (4), der Innenkörper (3) und die Zentriereinrichtung (5) eine vormontierte Baugruppe sind.

7. Hohlkörperanordnung, umfassend ein Rohr (2) eines Fahrradrahmens und eine Schutzanordnung nach einem der vorhergehenden Ansprüche, wobei die Schutzanordnung im Rohr (2) des Fahrradrahmens angeordnet ist.

8. Anordnung nach Anspruch 7, wobei der Innenkörper (3) ein Rohr, insbesondere ein Zylinderrohr, ist und/oder wobei der Schutzkörper (4) ein Rohr, insbesondere ein Zylinderrohr, ist.

9. Fahrradrahmen, umfassend eine Schutzanordnung und/oder eine Hohlkörperanordnung gemäß einem der vorhergehenden Ansprüche.

## Claims

1. Protective assembly for a bicycle, comprising:
- an internal member (3),
- a protective member (4), and
- a centring installation (5) having a first centring element (51) and a second centring element (52),
- wherein the protective member (4) is specified for being disposed between a saddle tube (2), configured as a first hollow member, of a bicycle frame, and the internal member (3),
- wherein the second centring element (52) is specified for centring the protective member (4) in relation to the tube (2) of the bicycle frame, and
- wherein the first centring element (51) and the second centring element (52) are integrated in a component formed in one piece,
**characterized in that**
- the first centring element (51) centres the protective member (4) in relation to the internal member (3), and
- the internal member (3) is a second hollow member.

2. Assembly according to Claim 1, wherein the first centring element (51) and/or the second centring element (52) are/is configured so as to be elastic.

3. Assembly according to one of the preceding claims, wherein the component formed in one piece has an external ring which encompasses the second centring element (52).

4. Assembly according to one of the preceding claims, wherein the component formed in one piece has a multiplicity of cams which, from the external ring, are directed radially inwards and which form the first centring element (51).

5. Assembly according to Claim 4, wherein the protective member (4) has a first end having a multiplicity of slots (40), the cams of the first centring element (51) projecting inwards through said slots (40).

6. Assembly according to one of the preceding claims, wherein the protective member (4), the internal member (3), and the centring installation (5) are a pre-assembled functional group.

7. Hollow member assembly comprising a tube (2) of a bicycle frame and a protective assembly according to one of the preceding claims, wherein the protective assembly is disposed in the tube (2) of the bicycle frame.

8. Assembly according to Claim 7, wherein the internal member (3) is a tube, in particular a cylindrical tube, and/or wherein the protective member (4) is a tube, in particular a cylindrical tube.

9. Bicycle frame, comprising a protective assembly and/or a hollow member assembly according to one of the preceding claims.

## Revendications

1. Agencement de protection pour une bicyclette, comprenant :
- un corps intérieur (3),
- un corps de protection (4), et
- un dispositif de centrage (5) doté d'un premier élément de centrage (51) et d'un deuxième élément de centrage (52),
- le corps de protection (4) étant conçu pour être disposé entre un tube de selle (2) réalisé sous la forme d'un premier corps creux d'un cadre de bicyclette et le corps intérieur (3),
- le deuxième élément de centrage (52) étant conçu pour centrer le corps de protection (4) par rapport au tube (2) du cadre de bicyclette, et
- le premier élément de centrage (51) et le deuxième élément de centrage (52) étant intégrés dans un composant monobloc,
**caractérisé en ce que**
- le premier élément de centrage (51) centre le corps de protection (4) par rapport au corps intérieur (3), et
- le corps intérieur (3) est un deuxième corps creux.

2. Agencement selon la revendication 1, dans lequel le premier élément de centrage (51) et/ou le deuxième élément de centrage (52) sont réalisés pour être élastiques.

3. Agencement selon l'une quelconque des revendications précédentes, dans lequel le composant monobloc présente un anneau extérieur qui englobe le deuxième élément de centrage (52).

4. Agencement selon l'une quelconque des revendications précédentes, dans lequel le composant monobloc présente une pluralité de taquets orientés radialement vers l'intérieur à partir de l'anneau extérieur qui constituent le premier élément de centrage (51).

5. Agencement selon la revendication 4, dans lequel le corps de protection (4) présente une première extrémité dotée d'une pluralité de fentes (40) à travers lesquelles les taquets du premier élément de centrage (51) font saillie vers l'intérieur.

6. Agencement selon l'une quelconque des revendications précédentes, dans lequel le corps de protection (4), le corps intérieur (3) et le dispositif de centrage (5) sont un sous-ensemble prémonté.

7. Agencement de corps creux, comprenant un tube (2) d'un cadre de bicyclette et un agencement de protection selon l'une quelconque des revendications précédentes, dans lequel l'agencement de protection est disposé dans le tube (2) du cadre de bicyclette.

8. Agencement selon la revendication 7, dans lequel le corps intérieur (3) est un tube, en particulier un tube cylindrique, et/ou dans lequel le corps de protection (4) est un tube, en particulier un tube cylindrique.

9. Cadre de bicyclette, comprenant un agencement de protection et/ou un agencement de corps creux selon l'une quelconque des revendications précédentes.
